(19) Europäisches Patentamt
European Patent Office
Office européen des brevets

(11) **EP 2 728 384 A2**

(12) **EUROPEAN PATENT APPLICATION**

(43) Date of publication:
**07.05.2014 Bulletin 2014/19**

(51) Int Cl.:
*G01V 1/38* (2006.01)   *G01V 3/08* (2006.01)

(21) Application number: **13188843.0**

(22) Date of filing: **16.10.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority:   **01.11.2012   US 201261721121 P
13.11.2012   US 201261725801 P
15.05.2013   US 201313895179**

(71) Applicant: **PGS Geophysical AS
0216 Oslo (NO)**

(72) Inventor: **Lecocq, Paul
London, W13 0LG (GB)**

(74) Representative: **Skone James, Robert Edmund
Gill Jennings & Every LLP
The Broadgate Tower
20 Primrose Street
London EC2A 2ES (GB)**

(54) **Methods and systems for monitoring a petroleum reservoir**

(57)   Computational methods and systems for monitoring a petroleum reservoir are disclosed. A baseline survey is used to generate baseline data for a petroleum reservoir. Subsequent monitor surveys generate monitor data at different stages of production on the reservoir. The baseline data is reconstructed as if it was acquired at the locations of the sources and receivers of the monitor surveys, and the monitor data is reconstructed as if it was acquired at the same locations of the sources and receivers of the baseline survey. For each monitor survey, two four-dimensional ("4D") difference data sets are generated from the baseline and monitor data and from the reconstructed data. The 4D difference data sets are combined to reduce background and produce 4D signal data that provides reliable and accurate interpretation of production activity on the reservoir.

FIG. 1A

EP 2 728 384 A2

**Description**

BACKGROUND

Marine geophysical surveys (for example, seismic surveys or electromagnetic surveys) are often repeated over a geographical area in an effort to monitor fluid flow and/or production on a petroleum reservoir within the area. Typically, before production activities begin on the reservoir, a first marine geophysical survey is carried out to collect reference geophysical data that is used to determine the potential presence of petroleum and estimate the extent and volume of the reservoir. After production activities begin on the reservoir, one or more subsequent marine geophysical surveys may be repeated in order to acquire geophysical data that can be compared with the reference geophysical data. Development of the reservoir can be monitored over time by comparing the later acquired geophysical data with the reference geophysical data. Differences between the reference geophysical data and the later acquired geophysical data may also provide information that can be used to design and implement strategies for maximizing reservoir production.

In order to obtain an accurate assessment of the differences between the reference geophysical data and the later acquired geophysical data, the repeat surveys may be conducted with survey parameters that are as close as possible to the survey parameters of the first survey. However, the repeat surveys are likely carried out under different environmental conditions than the first survey. Different environmental conditions include wind, swells, and ocean currents that change source and receiver locations even though for every repeat survey painstaking efforts are made to faithfully reproduce the survey parameters of the first survey. As a result, the quality of the geophysical data is different for each survey, which translates into reduced accuracy in assessing the differences between the later acquired geophysical data and the reference geophysical data. Those working in the petroleum industry seek systems and methods for accurately monitoring petroleum reservoirs in formations below a marine environment.

In accordance with a first aspect of the present invention, we provide a method for monitoring a petroleum reservoir using one or more programmable computers programmed to perform the method comprising:

> receiving a first monitor data set generated by a first survey of a subterranean formation that contains the petroleum reservoir;
> receiving a second monitor data set generated by a second survey of the subterranean formation, the second survey conducted at a different stage of production from the first survey;
> generating a reconstructed first monitor data set at locations of the second monitor data set;
> generating a reconstructed second monitor data set at locations of the first monitor data set;
> computing a first four-dimensional ("4D") difference data set from the first monitor data set and the reconstructed second monitor data set;
> computing a second 4D difference data set from the reconstructed first monitor data set and the second monitor data set; and
> extracting 4D signal data common to the first and second 4D difference data sets.

In accordance with a second aspect of the present invention, we provide a computer system for generating four-dimensional ("4D") signal data used to monitor production of a petroleum reservoir, the computer system comprising:

> one or more processors;
> one or more computer-readable media; and
> a routine stored in one or more of the one or more data-storage devices and executed by the one or more processors, the routine directed to:

>> retrieving a first monitor data set from the one or more computer-readable media, the first monitor data set generated by a survey of a subterranean formation that contains the petroleum reservoir;
>> retrieving a second monitor data set from the one or more computer-readable media, the second monitor data set generated by a survey of the subterranean formation at a later stage of production on the petroleum reservoir;
>> generating a reconstructed first monitor data set at locations of the second monitor data set;
>> generating a reconstructed second monitor data set at locations of the first monitor data set;
>> computing two different 4D difference data sets from the first monitor data set, the reconstructed first monitor data set, the second monitor data set and the reconstructed second monitor data set; and
>> extracting 4D signal data common to the 4D difference data sets.

In accordance with a third aspect of the present invention, we provide a method for generating a geophysical data product, the method comprising:

processing monitor data sets using a programmable computer that is programmed to generate the geophysical data product, wherein the processing includes

retrieving a first monitor data set from one or more computer-readable media;

retrieving a second monitor data set from the one or more computer-readable media;

generating a reconstructed first monitor data set at locations of a second monitor data set;

generating a reconstructed second monitor data set at locations of the first monitor data set;

computing two different four-dimensional ("4D") difference data sets from the first monitor data set, the reconstructed first monitor data set, the second monitor data set and the reconstructed second monitor data set; and

extracting 4D signal data common to the 4D difference data sets.

The first monitor data set may be generated by a baseline survey of a subterranean formation that contains a petroleum reservoir.

Reconstructing the first monitor data set at locations of the second monitor data set preferably further comprises applying interpolation and anti-leakage Fourier transforms to the first monitor data set; while reconstructing the second monitor data set at locations of the first monitor data set preferably further comprises applying interpolation and anti-leakage Fourier transforms to the second monitor data set.

The method preferably further comprises generating two different 4D difference data sets by computing a first 4D difference data set from the first monitor data set and the reconstructed second monitor data set; and computing a second 4D difference data set from the reconstructed first monitor data set and the second monitor data set.

Further, computing the first 4D difference data set may further comprise computing the difference between the reconstructed first monitor data set and the second monitor data set, and computing the second 4D difference data set may further comprise computing the difference between the first monitor data set and the reconstructed second monitor data set.

## DESCRIPTION OF THE DRAWINGS

Figures 1A-1B show side-elevation and top views, respectively, of an example marine geophysical data acquisition system

Figure 2 shows a side-elevation view of an example marine seismic data acquisition system with a magnified view of a receiver.

Figure 3 shows ray paths that represent paths of an acoustic impulse traveling from a source to an interface within a subterranean formation and to receivers along a streamer.

Figure 4A shows an example gather of five traces.

Figure 4B shows an example gather of five traces after normal moveout.

Figure 4C shows a gather of fifteen traces recorded over a period of time.

Figures 5A-5B show side-elevation and top views, respectively, of an example electromagnetic marine surveying system.

Figure 6 shows survey tracks of an example marine survey.

Figures 7A-7C show three-dimensional perspective views of an example petroleum reservoir at three different stages of production.

Figure 8 shows a flow-control diagram of a method for monitoring development of a subterranean petroleum reservoir over time.

Figures 9A-9B show plots of baseline data and monitor data, respectively.

Figures 10A-10D show forward and backward reconstruction.

Figures 11A-11B shows example plots of a four-dimensional ("4D") signal and noise.

Figure 11C shows an example plot of a 4D signal with 4D noise removed.

Figure 12 shows an example of a generalized computer system that executes efficient methods for monitoring a petroleum reservoir.

## DETAILED DESCRIPTION

Computational methods and systems for monitoring a petroleum reservoir below a marine environment are described. As used herein, "petroleum reservoir" refers to a volume of a subterranean formation that provides indications of the possibility of containing petroleum presently or sometime in the past. Seismic data from a baseline survey is used to generate baseline data that reveals the presence and extent of a petroleum reservoir within a subterranean formation. Subsequent monitor surveys are carried out at different stages of production on the petroleum reservoir to generate monitor data. The baseline data is reconstructed as if it was acquired at the locations of the sources and receivers of the monitor surveys. Reciprocally, the monitor data from each of the monitor surveys is reconstructed as if it was acquired at the same locations of the sources and receivers of the baseline survey. By performing this two-way reconstruction, two distinct four-dimensional ("4D") difference data sets are generated for each monitor survey. The two 4D difference data sets are similar with respect to representing the effects of petroleum production, but each 4D difference data set exhibits different background noise. Methods include combining the two 4D difference data sets for each monitor survey such that the background noise is reduced and 4D signal data is produced for reliable and accurate interpretation of production activity on the petroleum reservoir.

<u>Marine Seismic Data Acquisition Systems</u>

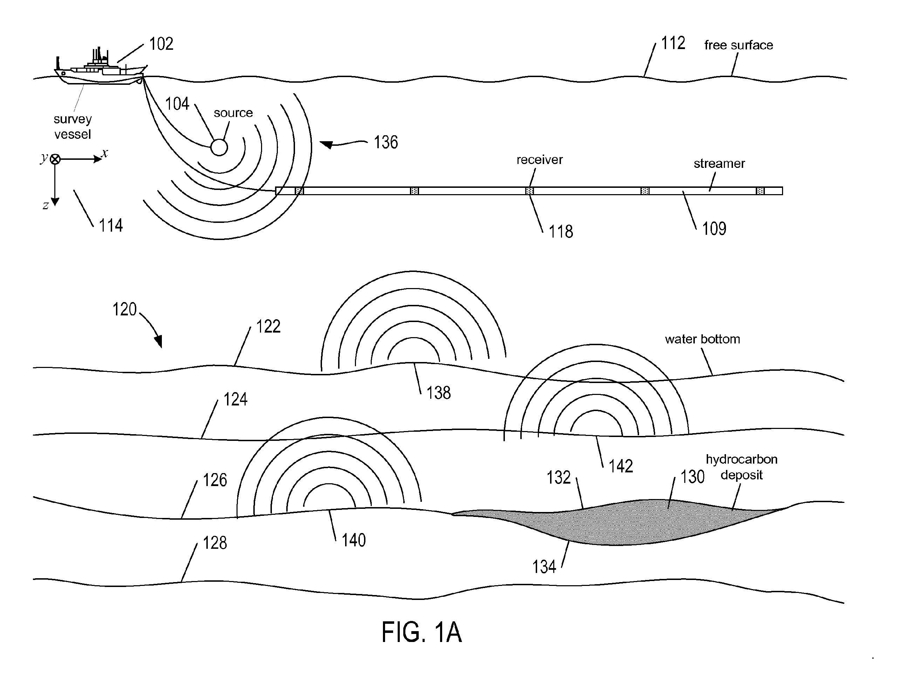

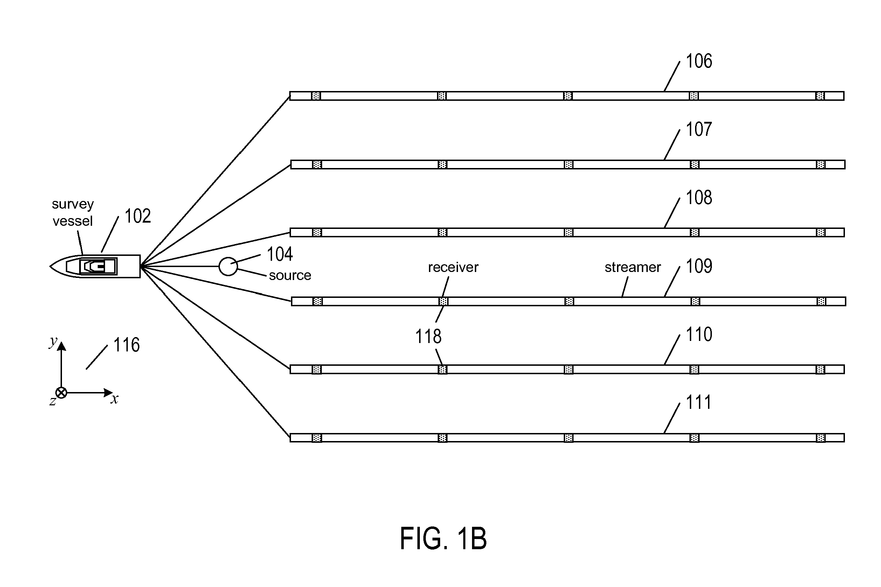

Figures 1A-1B show side-elevation and top views, respectively, of an example geophysical seismic data acquisition system composed of an exploration survey vessel 102 towing a source 104 and six separate streamers 106-111 beneath a free surface 112 of a body of water. The body of water can be a region of an ocean, a sea, a lake, or a river. In this example, each streamer is attached at one end to the survey vessel 102 via a streamer-data-transmission cable. The streamers 106-111 form a planar horizontal receiver acquisition surface with respect to the free surface 112. However, in practice, the receiver acquisition surface may be smoothly varying due to active sea currents and weather conditions. In other words, although the streamers 106-111 are illustrated in Figures 1A and 1B as being straight, in practice, the towed streamers may undulate as a result of dynamic conditions of the body of water in which the streamers are submerged. It should be noted that a receiver acquisition surface is not limited to having a planar horizontal orientation with respect to the free surface 112. The streamers may be towed at depths that orient the receiver acquisition surface at an angle with respect to the free surface 112 or so that one or more of the streamers are towed at different depths. It should also be noted that a receiver acquisition surface is not limited to six streamers as shown in Figure 1B. In practice, the number of receivers used to form a receiver acquisition surface can range from as few as one streamer to as many as 20 or more streamers.

Figure 1A includes an *xz*-plane 114 and Figure 1B includes an *xy*-plane 116 of the same Cartesian coordinate system having three orthogonal, spatial coordinate axes labeled *x*, *y* and *z*. The coordinate system is used to specify orientations and coordinate locations within a body of water. The *x*-direction specifies the position of a point in a direction parallel to the length of the streamers and is referred to as the "in-line" direction. The *y*-direction specifies the position of a point in a direction perpendicular to the *x*-axis and substantially parallel to the free surface 112 and is referred to as the "cross-line" direction. The z-direction specifies the position of a point perpendicular to the *xy*-plane (i.e., perpendicular to the free surface 112) with the positive z-direction pointing downward away from the free surface 112. Streamer depth below the free surface 112 can be estimated at various locations along the streamers using depth measuring devices attached to the streamers. For example, the depth measuring devices can measure hydrostatic pressure or utilize acoustic distance measurements. The depth measuring devices can be integrated with depth controllers, such as paravanes or water kites, that control and maintain the depth and position of the streamers as the streamers are towed through a body of water. The depth measuring devices are typically placed at intervals (e.g., about 300 meter intervals) along each streamer. Note that in other embodiments buoys may be used to maintain the orientation and depth of the streamers below the free surface 112.

In Figures 1A-1B, shaded rectangles 118 represent receivers or sensors that are spaced-apart along the length of each streamer. The streamers 106-111 are long cables containing power and data-transmission lines that connect the receivers 118 to seismic acquisition equipment located on board the survey vessel 102. Each receiver may be a dual sensor including a particle motion sensor that detects particle motion, velocities or accelerations over time, and a pressure sensor that detects variations in water pressure over time.

Figure 1A shows a cross-sectional view of the survey vessel 102 towing the source 104 and streamers above a subterranean formation 120. Curve 122 represents a surface at the bottom of a body of water located above the subterranean formation 120. The subterranean formation 120 is composed of a number of subterranean layers of sediment and rock. Curves 124, 126, and 128 represent interfaces between subterranean layers of different compositions. A shaded region 130, bounded at the top by a curve 132 and at the bottom by a curve 134, represents a fluid-rich subterranean deposit, the depth and positional coordinates of which may be determined by analysis of seismic data collected during a marine seismic survey. As the survey vessel 102 moves over the subterranean formation 120 the source 104 produces an acoustic impulse at spatial and temporal intervals. In other embodiments, the source 104 may be towed by a separate survey vessel or a number of sources may be towed by a number of different vessels. Source 104 may be an air gun, marine vibrator, or an array of air guns and/or marine vibrators. Figure 1A illustrates an acoustic impulse expanding outward from the source 104 as a pressure wavefield 136 represented by semicircles of increasing radius centered at the source 104. The wavefronts are, in effect, shown in vertical plane cross section in Figure 1A. The outward and downward expanding portion of the pressure wavefield 144 is called the "primary wavefield," which eventually reaches the surface 122 of the subterranean formation 120, at which point the primary wavefield is partially reflected from the surface 122 and partially refracted downward into the subterranean formation 120, becoming elastic waves within the subterranean formation 120. In other words, in the body of water, the acoustic impulse is composed of compressional pressure waves, or P-waves, while in the subterranean formation 120, the waves include both P-waves and transverse waves, or S-waves. Within the subterranean formation 120, at each interface between different types of materials or at discontinuities in density or in one or more of various other physical characteristics or parameters, downward propagating waves are partially reflected and partially refracted. As a result, each point of the surface 122 and each point of the interfaces within the underlying subterranean formation 120 becomes a potential secondary point source from which acoustic and elastic wave energy, respectively, may emanate upward toward the receivers 118 in response to the acoustic impulse generated by the source 104 and downward-propagating elastic waves generated from the pressure impulse. As shown in Figure 1A, secondary waves of significant amplitude are generally emitted from points on or close to the surface 122, such as point 138, and from points on or very close to interfaces in the subterranean formation 120, such as points 140 and 142.

The secondary waves are generally emitted at different times within a range of times following the initial acoustic impulse. A point on the surface 122, such as the point 138, receives a pressure disturbance corresponding to the initial acoustic impulse more quickly than a point within the subterranean formation 120, such as points 140 and 142. Similarly, a point on the surface 122 directly beneath the source 104 receives the acoustic impulse sooner than a more distant-lying point on the surface 122. Thus, the times at which secondary and higher-order waves are emitted from various points within the subterranean formation 120 are related to the distance, in three-dimensional space, of the points from the source 104.

Acoustic and elastic waves, however, travel at different velocities within different materials as well as within the same material under different pressures. Therefore, the travel times of the primary wavefield and secondary wavefield emitted in response to the primary wavefield are functions of distance from the source 104 as well as the materials and physical characteristics of the materials through which the primary wave travels. In addition, the secondary expanding wavefronts may be altered as the wavefronts cross interfaces and as the velocity of sound varies in the media are traversed by the wave. The superposition of waves emitted from within the subterranean formation 120 in response to the primary wavefield is a generally complicated wavefield that includes information about the shapes, sizes, and material characteristics of the subterranean formation 120, including information about the shapes, sizes, and locations of the various reflecting features within the subterranean formation 120 of interest to exploration seismologists.

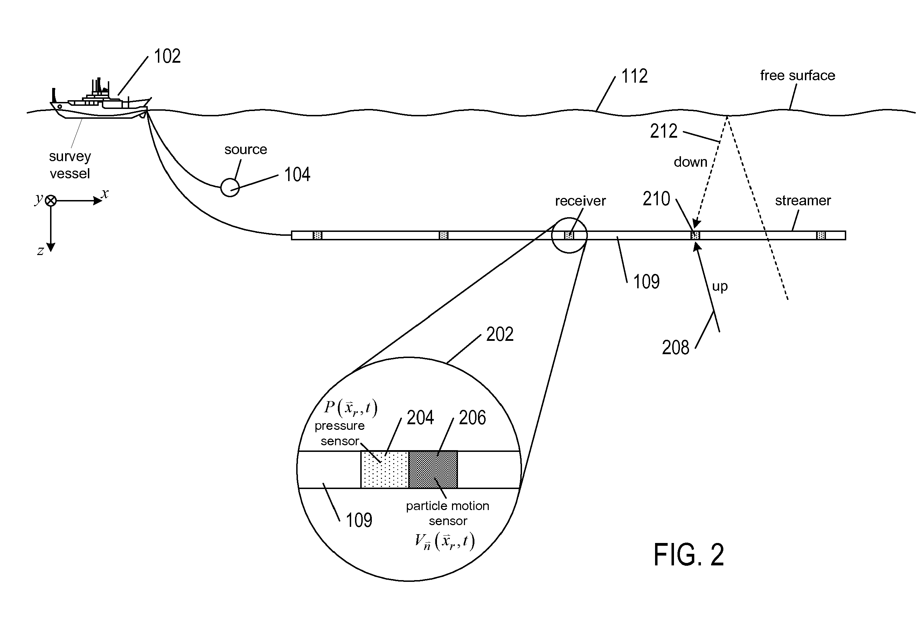

Figure 2 shows a side-elevation view of the marine seismic data acquisition system with a magnified view 202 of receiver 118. The magnified view 202 reveals that the receiver 118 may be a dual sensor composed of a pressure sensor 204 and a particle motion sensor 206. The pressure sensor may be a hydrophone. Each pressure sensor measures changes in hydrostatic pressure over time and produces pressure data denoted by $P(\vec{x}_r, t),$ where the subscript $r$ is a receiver index, $\vec{x}_r$ are the coordinates of the receiver, and $t$ represents time. The motion sensors are responsive to water motion. In general, particle motion sensors detect particle motion in a direction normal to the particle motion sensor and may be responsive to such directional displacement of the particles, velocity of the particles, or acceleration of the particles. The motion sensor data produced by the particle motion sensors may be converted to particle motion velocity data. For example, when motion sensors that are responsive to position are used, the motion sensor data may be differentiated to convert the data to particle motion velocity data. Likewise, when motion sensors that are responsive to acceleration (i.e., accelerometers) are used, the particle acceleration data may be integrated to convert the data to particle motion velocity data. The resulting data produced by the motion sensors is particle motion velocity data denoted by $V_{\vec{n}}(\vec{x}_r, t),$ where the subscript vector $\vec{n}$ is a normal unit vector that points in the direction normal to the motion sensor. The streamers 106-111 and the survey vessel 102 may include sensing electronics and data-processing facilities that allow measurements from each receiver to be correlated with absolute positions on the free surface 112 and absolute three-dimensional positions with respect to an arbitrary three-dimensional coordinate system. The pressure data and particle motion data represent pressure and velocity wavefields and are, therefore, also referred to as the pressure wavefield and velocity wavefield, respectively.

In Figure 2, directional arrow 208 represents the direction of an up-going wavefield at the location of receiver 210 and dashed arrows 212 represents a down-going wavefield produced by up-going wavefield reflection from the free surface 112 before reaching the location of receiver 210. In other words, the pressure wavefield $P(\vec{x}_r, t)$, is composed of an up-going pressure wavefield component and a down-going pressure wavefield component, and the velocity wavefield $V_{\vec{n}}(\vec{x}_r, t)$ is composed of an up-going velocity wavefield component and a down-going velocity wavefield component. The down-going wavefield contaminates pressure and particle motion velocity data and creates notches in the spectral domain. Filtering may be done to remove the down-going wavefields from the pressure and particle motion velocity data, leaving the up-going wavefields which are used to generate images of the subterranean formation.

Each pressure sensor and motion sensor generates seismic data in the form of a time series that consist of a number of consecutive measured values called amplitudes separated in time by a sample rate. The time series recorded by a pressure or motion sensor is called a "trace," which may consist of thousands of samples with a sample rate of about 1 to 5 ms. A trace is a recording of a subterranean formation response to acoustic energy that passes from the source 104, through subterranean layers, and is ultimately recorded by a sensor. A trace records variations in a time-dependent amplitude that represents acoustic energy in the portion of the secondary wavefield measured by the sensor. A secondary wavefield typically arrives first at the receivers located closest to the source 104. The distance from the source 104 to a receiver is called to the source-receiver offset, which creates a delay in the arrival time of a secondary wavefield from a substantially horizontal interface within the subterranean formation.

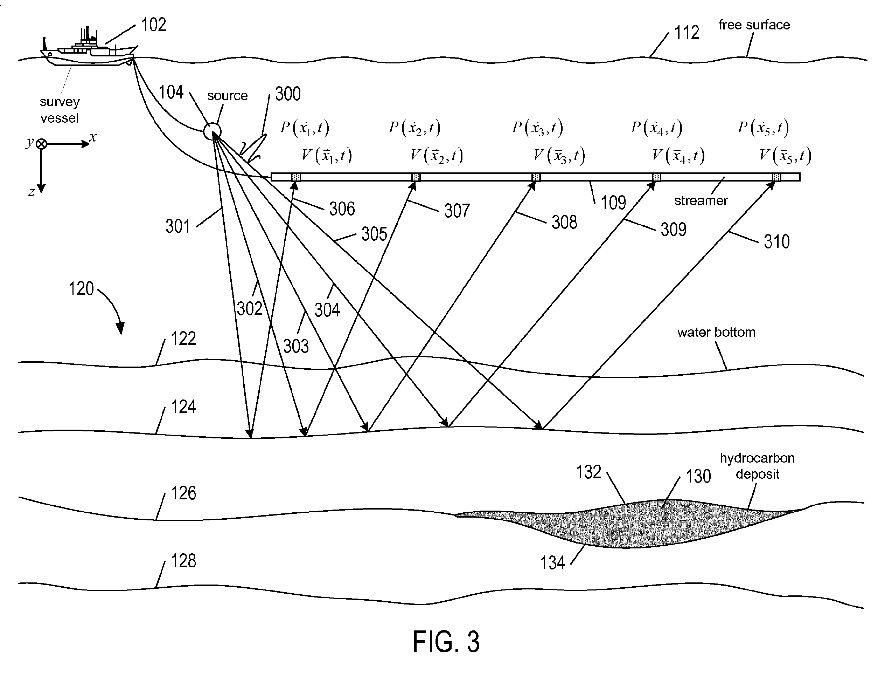

Figure 3 shows ray paths 301-305 that represent paths of an acoustic impulse 300 from the source 104 to the interface 124. Rays 306-310 represent the paths of acoustic energy reflected from the interface 124 (i.e., secondary wavefields) to the receivers located along the streamer 109. Each pressure sensor measures the hydrostatic pressure $P(\vec{x}_r, t)$ and each motion sensor measures particle motion velocity $V_{\vec{n}}(\vec{x}_r, t)$ of the acoustic energy generated by source 104 and reflected from the interface 124 (i.e., the aforementioned up-going wavefield). The hydrostatic pressure data $P(\vec{x}_r, t)$ and particle motion velocity data $V_{\vec{n}}(\vec{x}_r, t)$ measured by each receiver are time sampled and recorded as separate traces. A number of traces taken together form a gather, which represents the measured up-going wavefield.

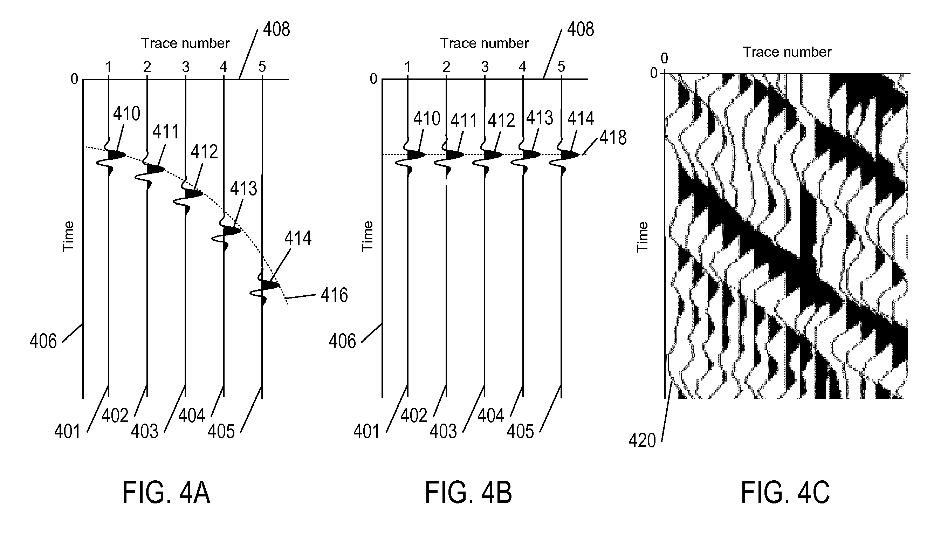

Figure 4A shows a plot of a source-receiver gather of example traces 401-405 of the up-going wavefield recorded by the five receives located along the streamer 109 shown in Figure 3. Vertical axis 406 represents time and horizontal axis 408 represents trace numbers with trace "1" representing the seismic data generated by the receiver located closest to the source 104 and trace "5" representing the seismic data generated by the receiver located farthest from the source 104. The traces 401-405 can represent variation in the amplitude of either the pressure data $P(\vec{x}_r, t)$ or the velocity data $V_{\vec{n}}(\vec{x}_r, t)$ recorded by corresponding sensors of the five receivers. The example traces include wavelets or pulses 410-414 that represent the up-going wavefield. Peaks, colored black, and troughs of each trace represent changes in the amplitude measured by the pressure sensors or motion sensors. The distances along the traces 401-405 from the trace number axis 408 to the wavelets 410-414 represents the travel time of the acoustic energy output from the source 104 to the interface 124 and ultimately to the receivers. The amplitude of the peak or trough of the wavelets 410-414 indicates the magnitude of acoustic energy recorded by the pressure sensor or motion sensor. Note that the arrival times versus source-receiver offset is longer with increased source-receiver offset and, in this example, has a hyperbolic shape 416. The traces from different source-receiver pairs may be corrected during seismic data processing to remove the effects of different source-receiver offsets in a process called "normal moveout" ("NMO"). Figure 4B shows a gather of the traces 410-414 after NMO has been applied to align the pulses in time as represented by horizontal line 418. After NMO corrections, traces from different shot records with a common reflection point can be stacked to form a single trace during seismic data processing. Stacking improves the signal-to-noise ratio, reduces noise, improves seismic data quality, and reduces the amount of data. A typical trace does not represent a single reflection from a single interface, as represented in Figures 4A-4B. In practice, a trace represents the time-dependant amplitude of acoustic energy associated with numerous reflections of acoustic energy from within the subterranean formation. Figure 4C shows a gather of 15 traces recorded over a period of time. Each trace, such as trace 420, varies in amplitude over time and represents acoustic energy reflected from a number of different interfaces within a subterranean formation as measured by a pressure sensor or a motion sensor. The gather shown in Figure 4C can represent a pressure wavefield or a velocity wavefield and can be a source-receiver gather, a common-receiver gather, or a common-midpoint gather.

Marine electromagnetic ("EM") survey technology has also been developed for identifying petroleum reservoirs. EM survey techniques generate primary time-varying EM fields, for example, using dipole antennas. The primary time-varying EM field extends downward into the subterranean formation where the field induces secondary currents, which, in turn, generate a secondary time-varying EM field. The resultant EM field is sensed at various locations distributed across a relatively large area, in order to detect nonuniformities resulting from non-uniform electrical resistance in various features within the subterranean formation. Hydrocarbons and hydrocarbon-saturated rocks and sediments have much higher resistivities than water and water-saturated rocks and sediments. High-resistance subterranean pooled hydrocarbons and hydrocarbon-saturated rocks and sediments result in a non-uniform distribution of secondary current paths and concentration of electrical field lines in conductive portions of the subterranean environment above the pooled hydrocarbons and hydrocarbon-saturated rocks and sediments.

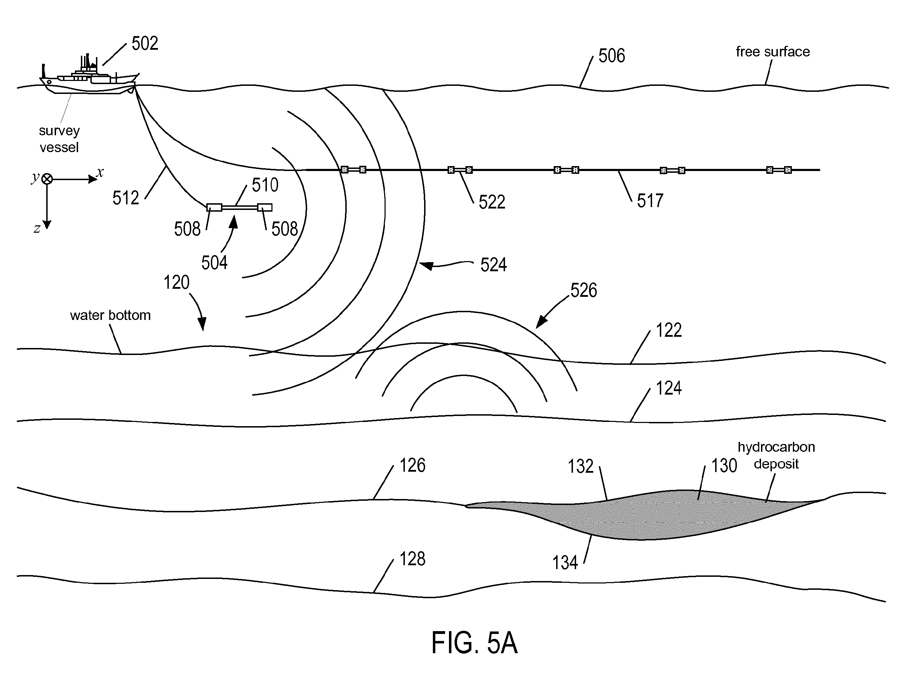

Figures 5A-5B show side-elevation and top views, respectively, of an example EM surveying system. In Figure 5A, a survey vessel 502 is shown towing an electric dipole source 504 below a free surface 506 of a body of water. The source 504 includes two source electrodes 508 located at opposite ends of a cable 510, which is connected to the survey vessel via a source cable 512. The source electrodes 508 and the cable 510 form a long horizontally oriented electric dipole transmission antenna. The source 504, shown in Figures 5A-5B, is not intended to be limited to a horizontal arrangement of the cable and electrodes. The source 504 may also include any one or more of a vertical electric dipole antenna, and horizontal or vertical magnetic dipole antenna (current loop). The source 504 can be anywhere from approximately 50 to 300 meters long or longer and is generally towed, in certain types of EM data-collection methods, at a depth of approximately 5 to 100 meters below the free surface 106.

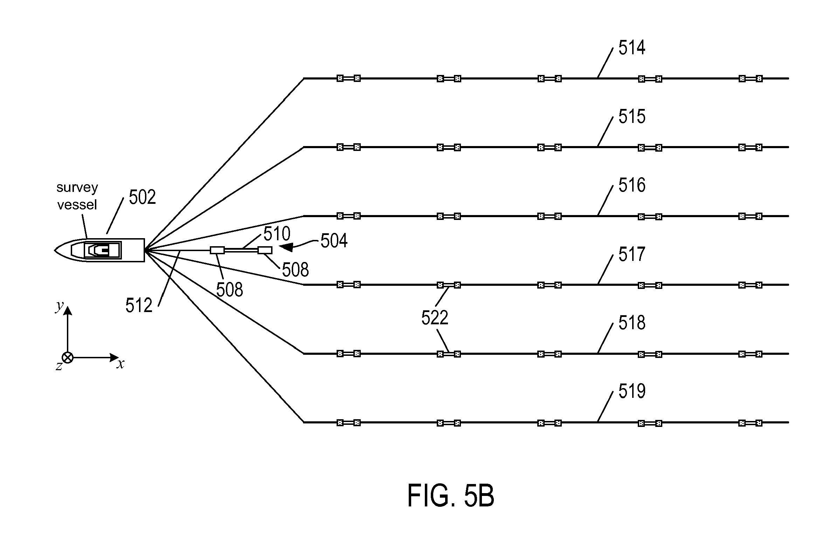

In Figures 5A and 5B, the survey vessel 502 also tows streamers 514-519 below the free surface 506. The streamers 514-519 form a planar horizontal data acquisition surface. Depth control devices may be used to maintain the horizontal orientation and depth of the streamers. The streamers 514-519 may be towed at depths between approximately 10 to 500 meters below the free surface 506. The receivers 522 can be electrometers that measure the electric field components of the primary and secondary EM fields, or the receivers 522 can be magnetometers that measure magnetic field components of the primary and secondary EM fields.

In practice, the EM data acquisition surface is smoothly varying due to active sea currents and weather conditions and the towed streamers may independently undulate as a result of dynamic conditions of the body of water. EM data acquisition surfaces are not limited to six streamers. The number of streamers that form an EM data acquisition surfaces may range from a single streamer to more than six streamers. The number of receivers located along any streamer is not intended to be limited to simply five receivers. The number of receivers located along a streamer can range from as few as one receiver to more than five receivers. In other embodiments, the source 504 may be towed by a separate vessel. Likewise, one or more of the streamers may be towed by a separate vessel, such as a submergible remotely operated vessel. In other embodiments, at least one of the streamers may be connected to buoys.

Figure 5A shows a side elevation view of the survey vessel 502, source 504, and streamers 514-519 towed above the subterranean formation 120 described above with reference to Figure 1A. An EM survey is carried out by transmitting time-varying electrical currents between the electrodes 508 of the source 504. The time-varying currents, of magnitudes generally from hundreds to thousands of amperes, generate an EM field that radiates outward from the source 504 as a primary EM field, represented by curves 524, that passes from the source 504 into the body of water and into the subterranean formation 120. In certain EM methods, the transmission currents have binary wave forms with a fundamental frequency of approximately 0.1 to approximately 0.25 Hz. The primary EM fields generate secondary, subterranean electric currents that, in turn, produce a secondary EM field, represented by curves 526, that is radiated back into the body of water. In other techniques, including inductively coupled time-domain EM, the transmission current is steadily ramped up to a relatively high, steady-on current value and then rapidly extinguished, leading to an electromotive force ("emf") impulse that generates secondary EM eddy currents in the subterranean formation which decay via Ohmic dissipation and produce weak, relatively short-lived secondary magnetic fields. Each receiver 522 records the time-varying magnitude of the resultant EM field strength, denoted by $E(\vec{x}_r, t)$, and may additionally record phases of the resultant EM fields. Because the receivers 522 are towed behind the moving survey vessel 502 and continuously recording data, the positions of the receivers are also continuously recorded along with receiver output that reflects the instantaneous magnitude and phase of the EM field at the current receiver location. The EM data can be processed to produce electrical-conductivity-based, three-dimensional maps of the subterranean formation.

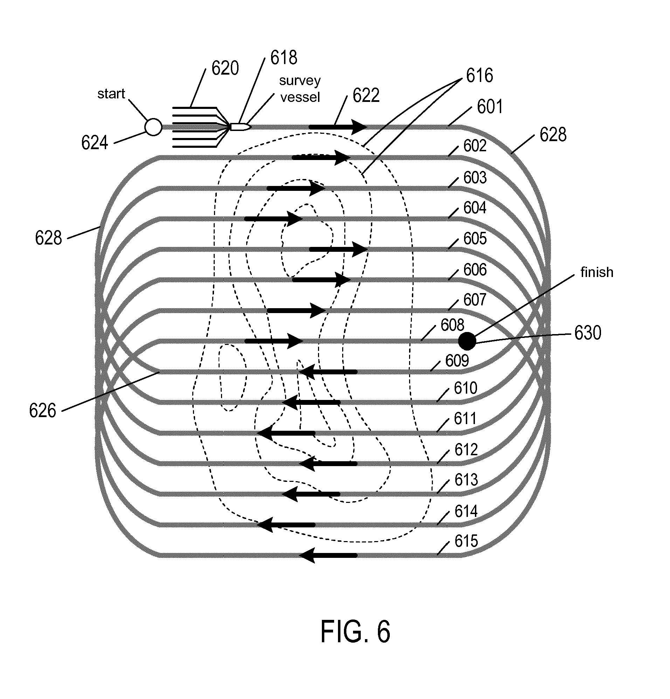

Figure 6 shows a top view of survey tracks 601-615 of a marine survey of a subterranean formation located beneath a body of water. Dashed line shapes 616 represent topographic contour lines of the formation. The subterranean formation 616 is surveyed to detect the presence and size of a petroleum reservoir located within the formation. A survey vessel 618 tows a set of streamers 620 and a source (not shown) along the parallel tracks 601-615. Directional arrows, such as directional arrow 622, represent the direction the survey vessel 618 travels along the tracks. The survey begins a start point 624. The survey vessel 618 activates the source at substantially regular intervals and records the pressure, velocity, and/or EM wavefields measured by the receivers as the survey vessel 618 travels along each of the tracks 601-615. When the survey vessel reaches the end of a track, the survey vessel 618 stops measuring and recording the wavefield and follows the path represented by an arc to a different track and begins activating the source and measuring and recording the wavefield. For example, at the end 626 of the track 609, the survey vessel 618 stops measuring and recording the wavefield, follows the path 628 to the track 602 and the survey vessel 628 measures and records the wavefields along the track 602. The survey vessel 618 continues this pattern of activating the source and measuring and recording the wavefields along each of the tracks 601-615 until the survey vessel 618 reaches a finish point 630 located at the end of the track 608.

The straight line tracks 601-615 shown in Figure 6A represent an example of ideal straight paths to be travelled by a survey vessel. In practice, however, a typical survey vessel is subject to shifting currents, winds, and tides and may only be able to travel approximately parallel straight line tracks. In addition, the streamers towed behind a survey vessel may not be towed directly behind the survey vessel because the streamers are subject to changing conditions, such as weather and currents. As a result, the streamers may deviate laterally from the track in a process called "feathering."

Ship tracks are not restricted to straight-line ship tracks described above with reference to Figure 6. Ship tracks can be curved, circular or any other suitable non-linear path. For example, in coil shooting surveys, a survey vessel travels in a series of overlapping, continuously linked circular, or coiled, ship tracks. The circular shooting geometry acquires a full range of offset data across every azimuth to sample the subsurface geology in all directions.

Systems and Methods for Four-Dimensional Petroleum Reservoir Monitoring

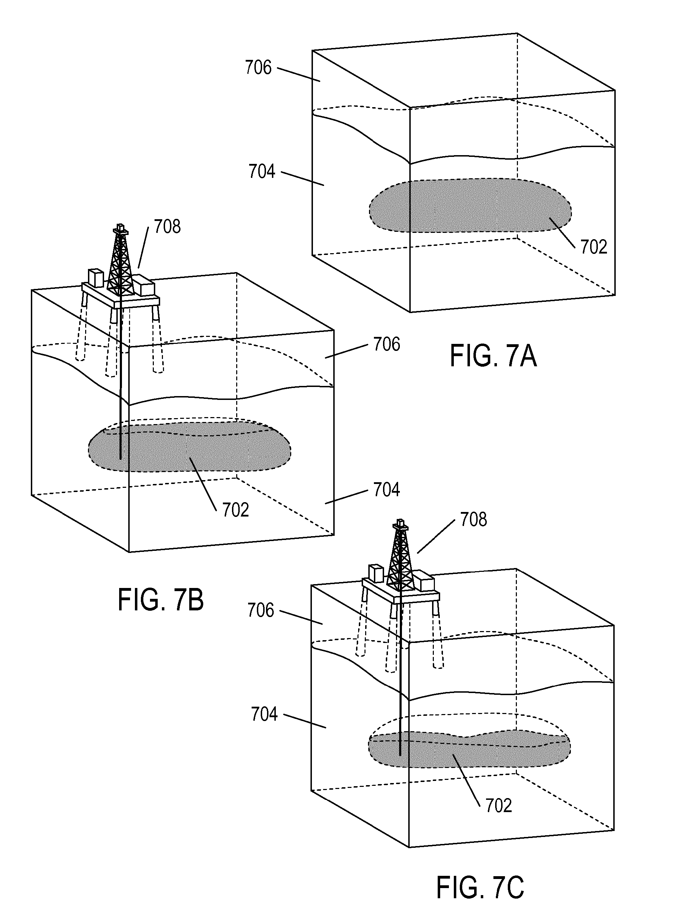

Marine surveys are often repeated for a subterranean formation with a petroleum reservoir in an effort to monitor changes in the petroleum reservoir over time. Figures 7A-7C show three-dimensional perspective views of an example petroleum reservoir 702 embedded within a subterranean formation 704 at three different stages of production. In Figures 7A-7C, the subterranean formation 704 is located beneath a body of water 706, and shading within the petroleum reservoir 702 represents the volume of the petroleum stored in the petroleum reservoir 702 at the three different stages of production. Figures 7A-7C provide conceptual three-dimensional representations of the extent and volume of the petroleum reservoir 702 that represent three-dimensional images determined using the marine acquisition surveys described above. For example, the seismic marine acquisition surveys described above with reference to Figures 1-4 can be used to determine three-dimensional features of a petroleum reservoir within a subterranean formation and the EM marine acquisition surveys described above with reference to Figure 5 can be used to confirm the presence and extent of the petroleum deposit within the petroleum reservoir. The first marine survey is called the "baseline survey," which generates three-dimensional seismic or EM data called "baseline data" that reveals the presence and extent of the petroleum reservoir 702 within the subterranean formation 704. Figures 7B-7C include an illustration of an oil platform 708 used to extract and process petroleum stored in the petroleum reservoir 702. The marine surveys carried out at different stages of production are the same type of survey as the baseline survey and are called "monitor surveys," which generate three-dimensional seismic and/or EM data called "monitor data." Figure 7B shows a three-dimensional image of the petroleum reservoir 702 at a first stage of production, and Figure 7C shows a three-dimensional image of the petroleum reservoir 702 obtained from a second monitor survey carried out at a later second stage of production. Methods for comparing the monitor data from each monitor survey with the baseline data to assess production activities on a petroleum reservoir are now described.

Processing monitor data acquired at each stage is called "four-dimensional ('4D') processing." The fourth dimension refers to the time lapse between stages at which the monitor data is acquired. Four-dimensional processing may include parallel processing the different monitor data sets and analyzing the differences between each monitor data set and the baseline data. The difference between the baseline data and later acquired monitor data is called a "4D difference." The 4D difference, described in greater detail below with reference to Equations (1) and (2), is composed of two terms, a 4D signal that represents the effects of production activities and 4D noise that represents variations in the environment and acquisition conditions. The 4D signal is often small and localized, while the 4D noise level can be high, essentially masking the 4D signal. In other words, the 4D signal-to-4D noise ratio is typically low. The processing and interpretation of the 4D differences as a function of time provides a way to monitor changes and development of a petroleum reservoir, which, in turn, provides information to assist in the design and implementation of a strategy for maximizing production.

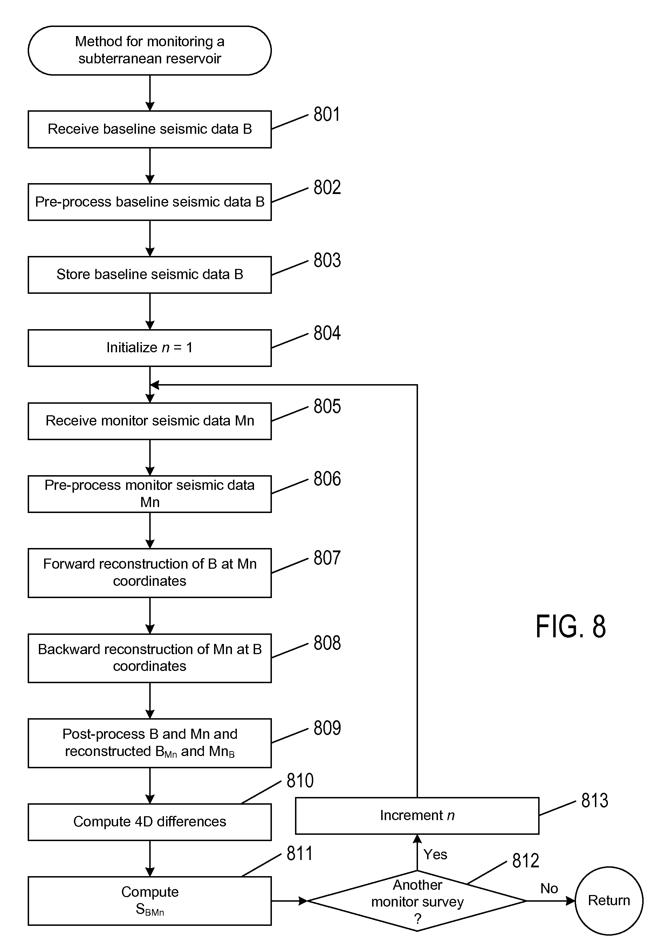

Figure 8 shows a flow-control diagram of a method for monitoring development of a subterranean petroleum reservoir over time. In block 801, baseline data, denoted by $\{B(\vec{x}_r, \vec{y}_s)\}$, is received, where $\vec{y}_s$ represents coordinates of the source in the baseline survey. The baseline data can be pressure sensor data $\{P(\vec{x}_r, \vec{y}_s)\}$, velocity data $\{V(\vec{x}_r, \vec{y}_s)\}$, or EM data $\{E(\vec{x}_r, \vec{y}_s)\}$. The baseline data can represent the wavefields associated with gathers collected along a ship track, such as shot-receiver gathers, common-midpoint gathers, or common-receiver gathers. The baseline data may also represent the entire set of wavefield data associated with gathers for a full survey of a geographical area. In block 802, the baseline data undergoes pre-processing. Pre-processing can include denoising, such as removal of swell noise, and adjusting for tidal and cold water statics such as adjusting the baseline data to the mean sea level and adjusting the velocity of sound in water which varies based on the temperature of the water. In block 803, the pre-processed baseline data is stored in one or more data storage devices.

In block 804, a monitor survey index, denoted by positive integer n, is initialized to one. The operations represented by blocks 805-813 are repeated for each set of monitor data collected from each monitor survey of the subterranean petroleum reservoir. In block 805, monitor data, denoted by $\{Mn(\vec{x}'_r, \vec{y}'_s)\}$, is received, where $\vec{x}'_r$ represents receiver r coordinates in the monitor survey, and $\vec{y}'_s$ represents the source coordinates in the monitor survey. The

receiver coordinates $\vec{x}'_r$ and source coordinates $\vec{y}'_s$ in each monitor survey may be different from the receiver coordinates $\vec{x}_r$ and source coordinates $\vec{y}_s$ in the baseline survey due to different environmental conditions under which the two surveys were conducted. The monitor data $\{Mn(\vec{x}'_r, \vec{y}'_s)\}$ received in block 805 is the same kind of seismic data as the baseline data $\{B(\vec{x}_r, \vec{y}_s)\}$ and at approximately the same source and receiver coordinates the baseline data. For example, when the baseline data is pressure sensor data, the monitor data is pressure sensor data; when the baseline data is velocity data, the monitor data is velocity seismic data; and when the baseline data is EM data, the monitor data is EM seismic data. In block 806, the monitor data is processed using the same preprocessing methods applied to the baseline data in block 802.

In order to obtain accurate images of the 4D difference, each monitor survey is conducted as close as possible to the baseline survey. In particular, each monitor survey is conducted to duplicate as close as possible the shooting directions along the ship tracks using the same number of streamer cables, the same distance between streamers with the streamer lengths, the same number of sources, and the sources are fired at approximately the same locations along the ship tracks. By attempting to duplicate the baseline survey in each monitor survey the receiver coordinates $\vec{x}'_r$ and source coordinates $\vec{y}'_s$ in the monitor surveys are as close as possible to corresponding receiver coordinates $\vec{x}_r$ and source coordinates $\vec{y}_s$ in the baseline survey. For example, suppose a baseline survey of the geographical area represented in Figure 6 is conducted as described above and shown in Figure 6. Each monitor survey of the same geographical area is conducted in the same manner. In other words, for each monitor survey, a survey vessel with substantially the same number of sources, streamers, and receivers travels the same survey ship tracks 601-615 in the same directions and the one or more sources are activated at approximately the same locations along the ship tracks 601-615 as the sources during the baseline survey. It is expected that each monitor survey may deviate from the baseline survey, because the environmental conditions of each monitor survey may be different from the environmental conditions for the baseline survey. For example, the source and receiver locations may not be reproducible, and variations in the environment (e.g., weather condition, swell noise, and currents) often affect the quality of both the recording and the positioning of the survey vessel, sources and streamers.

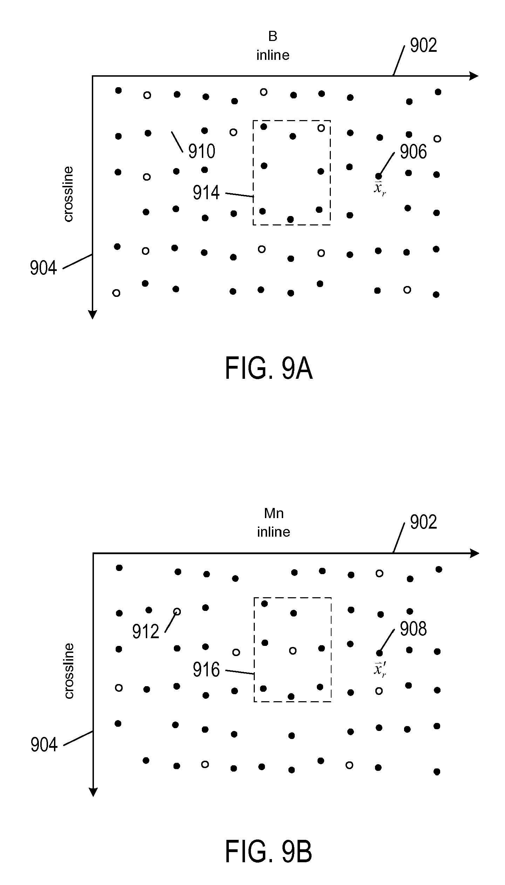

Figures 9A-9B show example plots of baseline data $\{B(\vec{x}_r, \vec{y}_s)\}$ and monitor data $\{Mn(\vec{x}'_r, \vec{y}'_s)\}$, respectively, for approximately the same shot location along approximately the same ship track of a survey. Figure 9A represents baseline data recorded at receiver locations associated with a source activate at a particular point along a ship track. Figure 9B represents monitor data for a monitor survey carried out at a later time. The monitor data is collected for a source activated at approximately the same point along approximately the same ship track that the source was activated to generate the baseline data. Horizontal axes 902 represent in-line coordinates, and vertical axes 904 represent cross-line coordinates. Black dots, such as black dot 906, represent the locations of receivers when the baseline and monitor data was recorded. The dots are not aligned in the in-line and cross-line directions because the environment conditions are different for the two surveys. Although the surveys are conducted with the same survey parameters, the coordinates $\vec{x}_r$ 906 of a receiver $r$ in the baseline survey approximates the coordinates $\vec{x}'_r$ 908 of the same corresponding receiver $r$ in the monitor survey, and the coordinates $\vec{y}_s$ of the source in the baseline survey approximates the coordinates $\vec{y}'_s$ of the corresponding source in the monitor survey $(\text{i.e., } |\vec{x}'_r - \vec{x}_r| \neq 0 \text{ and } |\vec{y}'_s - \vec{y}_s| \neq 0)$. Open spaces represent the locations of receivers that recorded unsatisfactory data that was discarded in one survey and open dots represent coordinates of corresponding receivers in the other survey where the seismic data is satisfactory. For example, open space 910 represents where a receiver in the baseline survey $B$ produced unsatisfactory trace data that was discarded and open dot 912 represents where a corresponding receiver in the monitor survey $Mn$ produced satisfactory trace data.

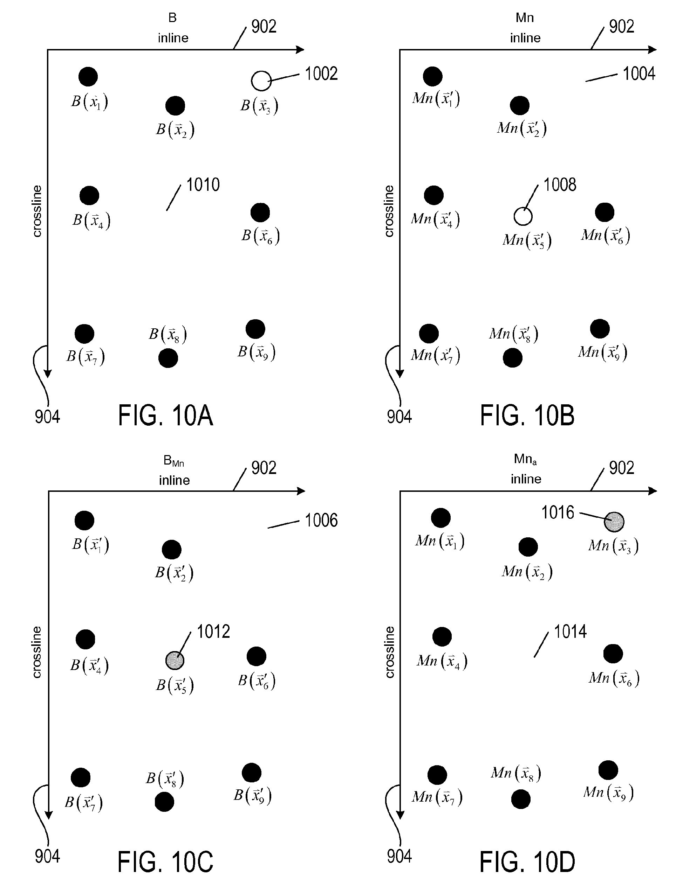

Returning to Figure 8, in block 807, the baseline data is reconstructed at the monitor data coordinates in a process called "forward reconstruction," and in block 808, the monitor data is reconstructed at the baseline data coordinates in a process called "backward reconstruction." Figures 10A-10D illustrate the concept of forward and backward reconstruction with the survey data in corresponding dashed line rectangles 914 and 916 in Figures 9A-9B. In Figures 10A-10D, black dots represent satisfactory seismic data that is common to the baseline and monitor surveys, but recorded at slightly difference locations. Consider first the operation of forward reconstruction in block 807, which is now described with reference to Figures 10A-10C. In Figure 10A, open dot 1002 represents satisfactory baseline data recorded by a receiver at location $\vec{x}_3$, which corresponds to open space 1004 in Figure 10B in which unsatisfactory monitor data was recorded by a receiver at location $\vec{x}'_3$ and discarded. Figure 10C represents baseline data reconstructed at monitor data locations shown in Figure 10B. As a result, the reconstructed baseline data shown in Figure 10C does not include reconstructed baseline data at the location $\vec{x}'_3$ as represented by open space 1006. On the other hand, open dot 1008 in Figure 10B represents satisfactory monitor data recorded by a receiver at the location $\vec{x}'_5$, which corresponds to open space 1010 in Figure 10A in which unsatisfactory baseline data was recorded by a receiver at location $\vec{x}_5$ and discarded. In Figure 10C, shaded dot 1012 represents reconstructed baseline data at the same coordinates as the monitor data 1008. Reconstruction of baseline data at the monitor survey locations is accomplished with interpolation. Reconstructed baseline data at the monitor survey locations is denoted by $\{B_{Mn}(\vec{x}'_r, \vec{y}'_s)\}$.

Returning to Figure 8, in block 808, the monitor data is reconstructed at the baseline data coordinates in a process called "backward reconstruction." Figures 10A, 10B and 10D illustrate the concept of backward reconstruction with the same survey data in corresponding dashed line rectangles 914 and 916 in Figures 9A-9B. Figure 10D represents monitor data reconstructed at baseline data locations shown in Figure 10A. The reconstructed monitor data shown in Figure 10D does not include reconstructed monitor data at the location $\vec{x}_5$ as represented by open space 1014 because the baseline data does not include baseline data at the location $\vec{x}_5$ 1010. On the other hand, open dot 1002 in Figure 10A represents satisfactory baseline data recorded by a receiver at the location $\vec{x}_3$, which corresponds to open space 1004 in Figure 10B in which unsatisfactory monitor data was recorded by a receiver at location $\vec{x}'_3$ and discarded. In Figure 10D, shaded dot 1016 represents reconstructed monitor data at the same coordinates $\vec{x}_3$ as the baseline data 1002. Reconstruction of monitor data at the baseline survey locations is also accomplished with interpolation. Reconstructed monitor data at the baseline survey locations is denoted by $\{Mn_B(\vec{x}_r, \vec{y}_s)\}$.

Because the seismic data may be irregularly spaced in the in-line and cross-line domain, techniques for forward and backward reconstruction in blocks 807 and 808 can be accomplished using interpolation and anti-leakage Fourier reconstruction methods. Examples of interpolation and anti-leakage Fourier reconstruction methods are described in U.S. Patent No. 7,751,277 filed March 17, 2008 and owned by PGS Geophysical As, and in "Seismic data regularization with the anti-alias anti-leakage Fourier transform," by Michel Schonewille et al., First Break, vol. 27, September 2009 (EAGE publications).

Returning to Figure 8, in block 809, post-processing the seismic data $\{B(\vec{x}_r, \vec{y}_s)\}$, $\{Mn(\vec{x}'_r, \vec{y}'_s)\}$, $\{B_{Mn}(\vec{x}'_r, \vec{y}'_s)\}$, and $\{Mn_B(\vec{x}_r, \vec{y}_s)\}$ is performed in order to put the baseline data and monitor data in a form that is normally used for interpretation of 4D effects. For example, post-processing may include operations such as residual de-multiple processing, pre-stack migration, stacking, partial stacking, and/or angle stacking of the seismic data $\{B(\vec{x}_r, \vec{y}_s)\}$, $\{Mn(\vec{x}'_r, \vec{y}'_s)\}$, $\{B_{Mn}(\vec{x}'_r, \vec{y}'_s)\}$, and $\{Mn_B(\vec{x}_r, \vec{y}_s)\}$.

In block 810, 4D differences are computed. For each pair of sources at approximately the same shot locations $_s$ and , the following pair of 4D differences are computed for each receivers $r$ as follows:

$$Mn(\vec{x}'_r, \vec{y}'_s) - B_{Mn}(\vec{x}'_r, \vec{y}'_s) = S_{BMn}(\vec{x}'_r, \vec{y}'_s) + N_{MnB}(\vec{x}'_r, \vec{y}'_s) \qquad (1)$$

$$Mn_B(\vec{x}_r, \vec{y}_s) - B(\vec{x}_r, \vec{y}_s) = S_{BMn}(\vec{x}_r, \vec{y}_s) + N_{BMn}(\vec{x}_r, \vec{y}_s) \qquad (2)$$

where

$$S_{BMn}(\vec{x}'_r, \vec{y}'_s) \text{ is a 4D signal;}$$

$$S_{BMn}(\vec{x}_r, \vec{y}_s) \text{ is a 4D signal;}$$

$$N_{MnB}(\vec{x}'_r, \vec{y}'_s) \text{ is 4D noise;}$$

and

$$N_{BMn}(\vec{x}_r, \vec{y}_s) \text{ is 4D noise.}$$

The 4D signals are approximately equal $(\text{i.e., } S_{BMn}(\vec{x}'_r, \vec{y}'_s) \approx S_{BMn}(\vec{x}_r, \vec{y}_s))$. But the 4D noise terms are different for each survey $(\text{i.e., } N_{MnB}(\vec{x}'_r, \vec{y}'_s) \neq N_{BMn}(\vec{x}_r, \vec{y}_s))$, because the environment conditions under which the baseline and monitor surveys are conducted are different.

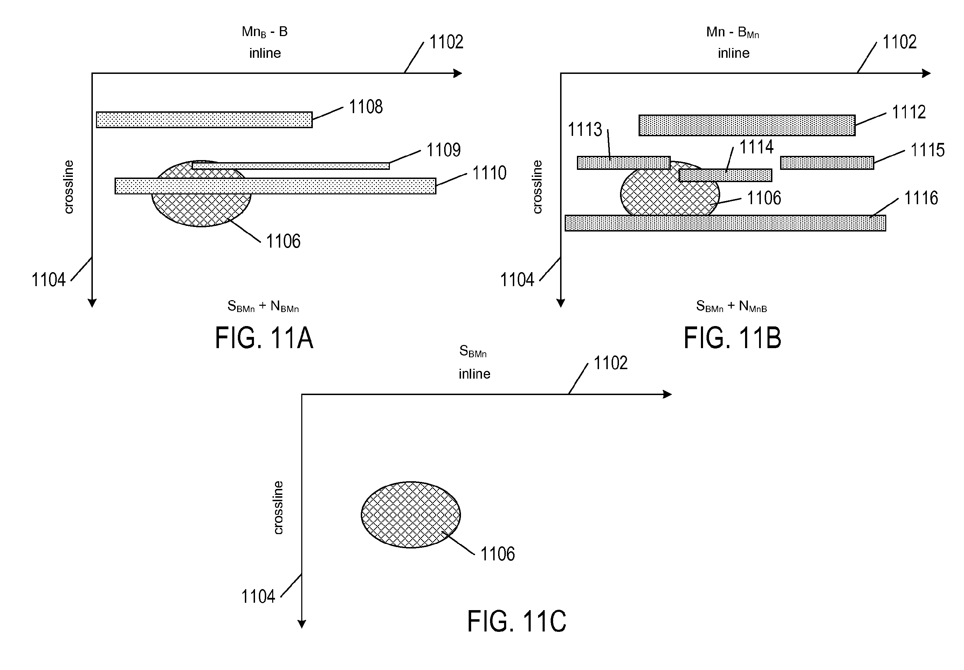

Figures 11A-11B shows example plots of a 4D signal and 4D noise for 4D differences $Mn_B$ - $B$ and $Mn$ - $B_{Mn}$, respectively. In Figures 11A-11B, horizontal axes 1102 represent in-line coordinates, vertical axes 1104 represents cross-line coordinates, and a cross-hatched elliptical shape 1106 represents the 4D signal $S_{BMn}$ that is common to both 4D differences. In Figure 11A, shaded regions 1108-1110 represent 4D noise $N_{BMn}$, and in Figure 11B, shaded regions 1112-1116 represent 4D noise $N_{MnB}$. The 4D noise $N_{BMn}$ and $N_{Mns}$ contaminates the 4D signal $S_{BMn}$ in both 4D differences, where the 4D noise overlaps with the 4D signal 1106. In the regions of overlap, the 4D signal-to-4D noise is low.

In block 811, the 4D difference pairs given by Equations (1) and (2) are combined using a stack procedure to compute a common 4D signal and reduce the overall level of 4D noise to a minimum. For each 4D difference, a signal and reduced noise are computed for each receiver $r$ as follows:

$$Stack\_pro\left(S_{BMn}(\vec{x}'_r, \vec{y}'_s) + N_{MnB}(\vec{x}'_r, \vec{y}'_s), S_{BMn}(\vec{x}_r, \vec{y}_s) + N_{BMn}(\vec{x}_r, \vec{y}_s)\right)$$
$$= S_{n,r} + N_{n,r} \tag{3}$$

where

$Stack\_pro(\cdot)$ represents a multi-azimuth stack procedure;

$S_{n,r} \approx S_{BMn}(\vec{x}'_r, \vec{y}'_s) \approx S_{BMn}(\vec{x}_r, \vec{y}_s)$ is common 4D signal data; and

$N_{n,r}$ is a reduced overall noise with $N_{n,r} < N_{MnB}(\vec{x}'_r, \vec{y}'_s)$ and $N_{n,r} < N_{BMn}(\vec{x}_r, \vec{y}_s)$.

The stack procedure $Stack\_pro(\cdot)$ can be a multi-azimuth stack procedure described in "Quantifying and increasing the value of multi-azimuth seismic," by Ted Manning et al., The Leading Edge 26, 510 (2007). The common 4D signals are stored in one or more data storage devices. The set of common 4D signal data $\{S_{n,r}\}$ produced in block 811 is the optimized 4D difference which is the end product to be interpreted and used to monitor production activity on the petroleum reservoir.

Figure 11C shows a plot of the 4D signal $S_{BMn}$ 1106 with both kinds of 4D noise $N_{BMn}$ and $N_{MnB}$ effectively removed after applying a stack procedure. The 4D signal $S_{BMn}$ 1106 represents a 4D signal that is common to the 4D differences $Mn_B$ - $B$ and $Mn$ - $B_{Mn}$.

Returning to Figure 8, in block 812, when monitor data is available from a subsequent monitor survey, control flows to block 813 in which the monitor survey index n is incremented and the operations associated with blocks 805-811 are repeated.

Implementations are not limited to comparing monitor data sets with the baseline data set. Alternatively, monitor data sets from monitor surveys collected at different times can be compared. For example, a set $\{Mm(\vec{x}''_r, \vec{y}''_s)\}$ can represent a set of monitor data collected for an *m*th monitor survey at source and receiver locations $(\vec{x}''_r, \vec{y}''_s)$ and the set $\{Mm_{Mn}(\vec{x}'_r, \vec{y}'_s)\}$ can represent the *m*th set of monitor data reconstructed at the *n*th monitor data *Mn* source and receiver locations $(\vec{x}'_r, \vec{y}'_s)$. In other words, the baseline data *B* in block 801 of Figure 8 may be replaced with monitor data *Mm* and the operations of blocks 802-813 may be executed for monitor data sets $\{Mm(\vec{x}''_r, \vec{y}''_s)\}$ and $\{Mn(\vec{x}'_r, \vec{y}'_s)\}$.

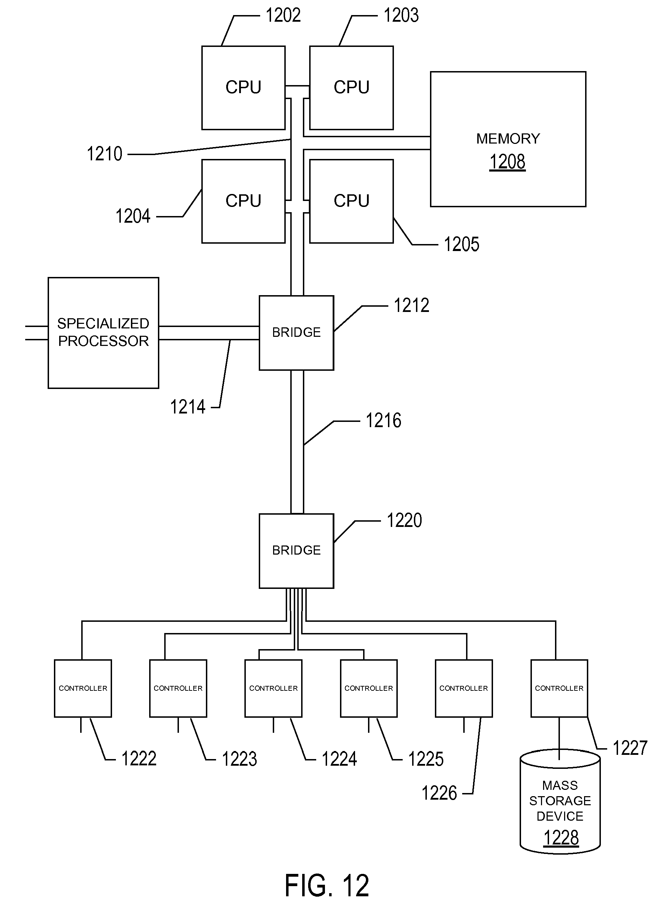

Figure 12 shows an example of a generalized computer system that executes efficient methods for monitoring a petroleum reservoir and therefore represents a geophysical-analysis data-processing system. The internal components of many small, mid-sized, and large computer systems as well as specialized processor-based storage systems can be described with respect to this generalized architecture, although each particular system may feature many additional components, subsystems, and similar, parallel systems with architectures similar to this generalized architecture. The computer system contains one or multiple central processing units ("CPUs") 1202-1205, one or more electronic memories 1208 interconnected with the CPUs by a CPU/memory-subsystem bus 1210 or multiple busses, a first bridge 1212 that interconnects the CPU/memory-subsystem bus 1210 with additional busses 1214 and 1216, or other types of high-speed interconnection media, including multiple, high-speed serial interconnects. The busses or serial interconnections, in turn, connect the CPUs and memory with specialized processors, such as a graphics processor 1218, and with one or more additional bridges 1220, which are interconnected with high-speed serial links or with multiple controllers 1222-1227, such as controller 1227, that provide access to various different types of computer-readable media, such as computer-readable medium 1228, electronic displays, input devices, and other such components, subcomponents, and computational resources. The electronic displays, including visual display screen, audio speakers, and other output interfaces, and the input devices, including mice, keyboards, touch screens, and other such input interfaces, together constitute input and output interfaces that allow the computer system to interact with human users. Computer-readable medium 1228 is a data-storage device, including electronic memory, optical or magnetic disk drive, USB drive, flash memory and other such data-storage device. The computer-readable medium 1228 can be used to store machine-readable instructions that encode the computational methods described above and can be used to store encoded data, during store operations, and from which encoded data can be retrieved, during read operations, by computer systems, data-storage systems, and peripheral devices.

The data-processing systems and methods described above produce a geophysical data product, which is the one or more non-transitory, computer-readable media that also includes the results of the computation methods describes above recorded thereon. The geophysical data product may also include instructions recorded thereon for transferring the data stored on the geophysical data product to another computer-readable medium for further processing. The geophysical data product may be produced offshore (i.e. by data-processing equipment on a survey vessel) or onshore (i.e. at a data-processing facility on land) either within the United States or in another country. When the geophysical data product is produced offshore or in another country, it may be imported onshore to a facility in the United States. Once onshore in the United States, geophysical analysis may be performed on the geophysical data product.

Various embodiments described herein are not intended to be exhaustive of or to limit this disclosure to the precise forms described. For example, any number of different computational-processing-method implementations that carry out the methods for randomizing firing times of simultaneous source may be designed and developed using various different programming languages and computer platforms and by varying different implementation parameters, including control structures, variables, data structures, modular organization, and other such parameters. The systems and methods for monitoring a petroleum reservoir can be executed in near-real time while conducting a monitor survey of a subterranean formation. The term "near-real time" refers to a time delay due to data transmission and data processing that is short enough to allow timely use of the time delays computed during a seismic data acquisition survey. For example, near-real time can refer to a situation in which generating the 4D difference is insignificant. In other embodiments, a number of monitor data sets can be collected at different stages of production on the petroleum reservoir and stored in one or more data storage devices, and a later time, the method described above can be selectively applied to the monitor data sets.

**Claims**

1. A method for monitoring a petroleum reservoir using one or more programmable computers programmed to perform the method comprising:

   receiving a first monitor data set generated by a first survey of a subterranean formation that contains the petroleum reservoir;
   receiving a second monitor data set generated by a second survey of the subterranean formation, the second survey conducted at a different stage of production from the first survey;
   generating a reconstructed first monitor data set at locations of the second monitor data set;
   generating a reconstructed second monitor data set at locations of the first monitor data set;
   computing a first four-dimensional ("4D") difference data set from the first monitor data set and the reconstructed second monitor data set;
   computing a second 4D difference data set from the reconstructed first monitor data set and the second monitor data set; and
   extracting 4D signal data common to the first and second 4D difference data sets.

2. The method of claim 1, wherein generating the reconstructed first monitor data set at locations of the second monitor data set further comprises applying interpolation and anti-leakage Fourier transforms to the first monitor data set.

3. The method of claim 1 or claim 2, wherein generating the reconstructed second monitor data set at locations of the first monitor data set further comprises applying interpolation and anti-leakage Fourier transforms to the second monitor data set.

4. The method of any of the preceding claims, wherein computing the first 4D difference data set further comprises computing a difference between the reconstructed first monitor data set and the second monitor data set.

5. The method of claim 1 or claim 2, wherein computing two different 4D difference data sets further comprises:

   computing a first 4D difference data set from the first monitor data set and the reconstructed second monitor data set; and
   computing a second 4D difference data set from the reconstructed first monitor data set and the second monitor data set.

6. The method of claim 1 or claim 2, wherein computing two different 4D difference data sets further comprises:

   computing the first 4D difference data set further comprises computing the difference between the reconstructed first monitor data set and the second monitor data set; and
   computing the difference between the first monitor data set and the reconstructed second monitor data set.

7. The method of any of the preceding claims, wherein computing the second 4D difference data set further comprises computing the difference between the first monitor data set and the reconstructed second monitor data set.

8. The method of any of the preceding claims, wherein extracting the 4D signal data common to the first and second 4D difference data sets further comprises applying multi-azimuth stacking to the first and second 4D difference data sets.

9. The method of any of the preceding claims, further comprising storing the 4D signal data in one or more computer readable media.

10. The method of any of the preceding claims, wherein the first monitor data is a baseline data set generated from a baseline survey of the subterranean formation.

11. A computer system for generating four-dimensional ("4D") signal data used to monitor production of a petroleum reservoir, the computer system comprising:

   one or more processors;
   one or more computer-readable media; and

a routine stored in one or more of the one or more data-storage devices and executed by the one or more processors, the routine directed to:

retrieving a first monitor data set from the one or more computer-readable media, the first monitor data set generated by a survey of a subterranean formation that contains the petroleum reservoir;
retrieving a second monitor data set from the one or more computer-readable media, the second monitor data set generated by a survey of the subterranean formation at a later stage of production on the petroleum reservoir;
generating a reconstructed first monitor data set at locations of the second monitor data set;
generating a reconstructed second monitor data set at locations of the first monitor data set;
computing two different 4D difference data sets from the first monitor data set, the reconstructed first monitor data set, the second monitor data set and the reconstructed second monitor data set; and
extracting 4D signal data common to the 4D difference data sets.

12. The system of claim 11 adapted to carry out a method according to any of claims 1 to 10.

13. A non-transitory computer-readable medium having machine-readable instructions encoded thereon for enabling one or more processors of a computer system to perform the operations of
retrieving a first monitor data set from one or more computer-readable media, the first monitor data set generated by a survey of a subterranean formation that contains the petroleum reservoir;
retrieving a second monitor data set from the one or more computer-readable media, the monitor data set generated by a survey of the subterranean formation at a later stage of production on the petroleum reservoir;
generating a reconstructed first monitor data set at locations of the second monitor data set;
generating a reconstructed second monitor data set at locations of the first monitor data set;
computing two different four-dimensional ("4D") difference data sets from the first monitor data set, the reconstructed first monitor data set, the second monitor data set, and the reconstructed second monitor data set; and
extracting 4D signal data common to the 4D difference data sets.

14. The medium of claim 13, wherein the machine-readable instructions enable the one or more processors to carry out a method according to any of claims 1 to 10.

15. A method for generating a geophysical data product, the method comprising:

processing monitor data sets using a programmable computer that is programmed to generate the geophysical data product, wherein the processing includes
retrieving a first monitor data set from one or more computer-readable media; retrieving a second monitor data set from the one or more computer-readable media;
generating a reconstructed first monitor data set at locations of a second monitor data set;
generating a reconstructed second monitor data set at locations of the first monitor data set;
computing two different four-dimensional ("4D") difference data sets from the first monitor data set, the reconstructed first monitor data set, the second monitor data set and the reconstructed second monitor data set; and
extracting 4D signal data common to the 4D difference data sets.

FIG. 1A

survey
vessel

102

104
source

receiver

streamer

106

107

108

109

110

111

116

118

FIG. 1B

FIG. 2

FIG. 3

FIG. 4A

FIG. 4B

FIG. 4C

FIG. 5A

FIG. 5B

FIG. 6

706
704
702

FIG. 7A

708

706
704
702

FIG. 7B

708
706
704
702

FIG. 7C

FIG. 8

Method for monitoring a subterranean reservoir

Receive baseline seismic data B — 801

Pre-process baseline seismic data B — 802

Store baseline seismic data B — 803

Initialize $n = 1$ — 804

Receive monitor seismic data Mn — 805

Pre-process monitor seismic data Mn — 806

Forward reconstruction of B at Mn coordinates — 807

Backward reconstruction of Mn at B coordinates — 808

Post-process B and Mn and reconstructed $B_{Mn}$ and $Mn_B$ — 809

Compute 4D differences — 810

Compute $S_{BMn}$ — 811

Another monitor survey ? — 812

Increment $n$ — 813

Yes

No

Return

FIG. 9A

FIG. 9B

B
inline
902

$B(\vec{x}_1)$

$B(\vec{x}_2)$

1002
$B(\vec{x}_3)$

1010
crossline

$B(\vec{x}_4)$

$B(\vec{x}_6)$

$B(\vec{x}_8)$

$B(\vec{x}_7)$

$B(\vec{x}_9)$

904

## FIG. 10A

Mn
inline
902

1004

$Mn(\vec{x}_1')$

$Mn(\vec{x}_2')$

crossline

$Mn(\vec{x}_4')$

1008
$Mn(\vec{x}_5')$

$Mn(\vec{x}_6')$

$Mn(\vec{x}_8')$

$Mn(\vec{x}_7')$

$Mn(\vec{x}_9')$

904

## FIG. 10B

B$_{Mn}$
inline
902

1006

$B(\vec{x}_1')$

$B(\vec{x}_2')$

crossline

$B(\vec{x}_4')$

1012
$B(\vec{x}_5')$

$B(\vec{x}_6')$

$B(\vec{x}_8')$

$B(\vec{x}_7')$

$B(\vec{x}_9')$

904

## FIG. 10C

Mn$_a$
inline
902

1016
$Mn(\vec{x}_3)$

$Mn(\vec{x}_1)$

$Mn(\vec{x}_2)$

crossline

$Mn(\vec{x}_4)$

1014

$Mn(\vec{x}_6)$

$Mn(\vec{x}_8)$

$Mn(\vec{x}_7)$

$Mn(\vec{x}_9)$

904

## FIG. 10D

FIG. 11A

FIG. 11B

FIG. 11C

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7751277 B

**Non-patent literature cited in the description**

- **MICHEL SCHONEWILLE et al.** Seismic data regularization with the anti-alias anti-leakage Fourier transform. *First Break,* September 2009, vol. 27

- **TED MANNING et al.** Quantifying and increasing the value of multi-azimuth seismic. *The Leading Edge,* 2007, vol. 26, 510